# EUROPÄISCHE PATENTSCHRIFT

(11) **EP 1 955 811 B1**
(45) Veröffentlichungstag und Bekanntmachung des Hinweises auf die Patenterteilung: **07.07.2010**
(21) Anmeldenummer: 08151263.4
(22) Anmeldetag: 11.02.2008
(51) Int. Cl.: B24B 13/00

(54) **Bearbeitungsmaschine zum Bearbeiten einer optischen Linse**
Processing machine for machining an optical lens
Machine d'usinage pour une lentille optique

(30) Priorität: 09.02.2007 DE 102007007188
(43) Veröffentlichungstag der Anmeldung: 13.08.2008
(73) Patentinhaber: Schneider GmbH + Co. KG, 35239 Steffenberg (DE)
(72) Erfinder: Schneider, Gunter, 35037 Marburg (DE)
(74) Vertreter: Thews, Gustav

(56) Entgegenhaltungen:
- EP-A- 0 937 542
- WO-A-03/033205
- WO-A-2006/061836
- DE-A1- 10 310 561
- DE-A1- 10 348 459
- DE-A1- 19 804 428
- US-A1- 2006 166 609

## Beschreibung

Die Erfindung bezieht sich auf eine Bearbeitungsmaschine zum Bearbeiten einer optischen Linse aus Kunststoff mit einer um eine Rotationsachse R1 rotierenden Werkstückspindel und mindestens einer ersten formgebenden Bearbeitungseinheit F und mindestens einer zweiten Bearbeitungseinheit G. Die Werkstückspindel weist eine Aufnahme für die Linse auf und ist zumindest in Richtung einer rechtwinklig zur Rotationsachse R1 verlaufenden Translationsachse T1 linear bewegbar gelagert. Die an der Aufnahme mittel- oder unmittelbar einspannbare Linse ist durch die erste Bearbeitungseinheit F zumindest auf einer Oberfläche zumindest teilweise über ein Werkzeug der Bearbeitungseinheit F spanend bearbeitbar.

Es ist bereits eine Vorrichtung zum formgebenden Bearbeiten bzw. Polieren von Linsen aus der EP 0 937 542 bekannt. Die Vorrichtung weist zwei Spindeln für Werkzeuge und eine Spindel für die Linse auf. Mit dieser Maschine ist neben dem Polieren der Linse das Abrichten des Polierwerkzeugs möglich. Eine Gravur der in der Werkstückspindel eingespannten Linse ist nicht vorgesehen.

Aus der gattungsbildenden DE 103 48 459 A1 ist eine Vorrichtung zum Drehen und Fräsen von Linsen mit einer Werkstückspindel, einer Frässpindel und einem Werkzeughalter für ein Drehwerkzeug bekannt. Eine Gravur der in der Werkstückspindel eingespannten Linse ist nicht vorgesehen.

Aus der WO 2006/061836 A2 ist ein Verfahren bekannt, welches nach dem spanenden Bearbeiten der Linse das Gravieren

der Linse und das anschließende Polieren der Linse vorsieht. Die Politur erfolgt vorzugsweise zwecks Vorbereitung der gravierten Oberfläche zum Beschichten. Ferner wird ein System beansprucht, das aus einem Laser zum Gravieren und einer Vorrichtung zum Behandeln der gravierten Oberfläche besteht.

Die DE 103 10 561 A1 beschreibt eine Vorrichtung zur Rezeptfertigung von Brillengläsern unter Verwendung von Kunststoffrohlingen und Anwendung von Fertigungsmethoden mit mechanischem Materialabtrag wie Fräsen, Drehen, Schleifen, Feinschleifen, Polieren. Die Vorrichtung besteht aus einer Maschine mit zwei rotatorisch angetriebenen Spindeln, die translatorisch verfahren werden können, wobei die Rotationen und die Translationen gesteuert und in der Maschinensteuerung verknüpft sind und mit den Spindeln Spann- und Bearbeitungswerkzeuge verbunden sind. Die Fräs/Drehmaschine verfügt über eine Werkzeugspindel, die in der B-Achse phasen- und drehzahlgesteuert rotiert und in der Y-Achse und in der X-Achse gesteuert verfahren werden kann. Die Werkstückspindel ist rotierbar, phasen- und drehzahlgesteuert und kann in der Z-Achse mit hoher Dynamik translatorisch verfahren werden. An der Linse werden durch fräsende Bearbeitung am Rand Markierungen angebracht, welche die Form einer Indexierung haben. Die Markierungen, die mit vorgenannter Graviertechnik erfolgten, werden auf der Linsenvorderseite angebracht (Abs. 0212 und Anspruch 16). Der Einsatz einer zweiten Bearbeitungseinheit sowie einer Translationsachse der Werkstückspindel, die rechtwinklig zur Rotationsachse verläuft, ist nicht beschrieben.

Die DE 198 04 428 A1 beschreibt eine Markier- bzw. Bohrvorrichtung sowie ein Verfahren zum Markieren und Bohren von Löchern in Brillengläsern unter Verwendung eines Laserbohrers zum Markieren bzw. Bohren der Löcher. Über die Ausbildung des Bohrers als Laserbohrer hinaus beschreibt die DE 198 04 428 A1 keine zum Gravieren einer Linse geeignete Vorrichtung oder ein entsprechendes Verfahren.

Die Bearbeitung von optischen Linsen ist ebenfalls aus US 2006/0166609 A1 und WO 03/033205 A1 bekannt.

Der Erfindung liegt die Aufgabe zugrunde, ein Verfahren bereitzustellen und einer Bearbeitungsmaschine derart auszubilden und anzuordnen, dass die Bearbeitungsqualität der Linse vom Linsenrohling bis hin zu der fertigen Linse optimiert wird.

Gelöst wird die Aufgabe erfindungsgemäß durch eine Bearbeitungsmaschine nach Anspruch 1. Bei der erfindungsgemäßen Bearbeitungsmaschine ist als zweite Bearbeitungseinheit eine die Linse auf der Oberfläche gravierende Einheit G vorgesehen, wobei die Linse zumindest für das formgebende Bearbeiten und für das Gravieren in der Aufnahme der Werkstückspindel mittel- oder unmittelbar einspannbar ist und die zweite Bearbeitungseinheit G eine Graviervorrichtung mit einer Laserquelle und Vorrichtungen zum Erzeugen eines Laserstrahls zum Herstellen einer Lasergravur auf der Linse aufweist. Hierdurch wird erreicht, dass die Linse zumindest für die formgebende Bearbeitung und zum Gravieren in ein und derselben Aufnahme verbleibt. Die Lage und die Position der zu Beginn der Bearbeitung eingespannten Linse bleiben in Bezug auf die Aufnahme an der Werkstückspindel unverändert. Alle zur formgebenden Bearbeitung des Linsenrohlings notwendigen Bearbeitungsschritte können mit bestmöglicher Präzision erfolgen, da die Position des Rohlings bzw. der Linse stets bekannt ist. Dies lässt in einem weiteren Schritt die Komplettbearbeitung der Linse einschließlich Reinigen und Polieren unter den gleichen Bedingungen zu. Ein zeitaufwendiges Umspannen der Linse mit dem damit einhergehenden Präzisionsverlust entfällt. Die Lasergravur ist dazu bestimmt, sowohl technische Daten der Linse als auch optisch wichtige Punkte oder Zonen wie bspw. den optischen Mittelpunkt der Linse zu kennzeichnen. Dadurch, dass die Linse nach dem formgebenden Bearbeiten der optischen Oberfläche nicht aus der Aufnahme ausgespannt wird, sind die Positionen einzelner wichtiger optischer Punkte oder Zonen auf der Linse, die anschließend durch Gravur gekennzeichnet werden sollen, aus den vorhandenen Daten des Antriebs der Aufnahme schon bekannt. Der optische Mittelpunkt der Linse bspw. kann somit relativ zu dem Bezugskoordinatensystem der Antriebseinheit exakt, ohne optisches Messverfahren ermittelt werden.

Vorteilhaft ist es auch, dass die Werkstückspindel in Richtung einer Oszillationsachse 02 rechtwinklig zu der Translationsachse T1 bewegbar gelagert und regelbar ist. Somit ist die für den jeweiligen Bearbeitungsvorgang gewünschte Axialbewegung der Linse gewährleistet. Insbesondere vor dem Graviervorgang erfolgt die Einstellung des Fokussierabstandes zum Laser bezüglich der zu gravierenden Oberfläche über die in Richtung des Laserstrahls verlaufende Translationsachse T1. Die Positionierung der Linse bzw. eines Bereichs der Linse vor der Graviereinheit G erfolgt ergänzend über die Translationsachse T1 und die Rotationsachse R1. Die Fokussierung des Laserstrahls erfolgt durch den Laser bzw. eine Fokussiereinheit.

Eine zusätzliche Möglichkeit ist gemäß einer Weiterbildung, dass die erste Bearbeitungseinheit F als Fräseinheit FF mit einem Fräswerkzeug und zumindest einer Fräsachse und/oder als Dreheinheit FD mit einem Drehwerkzeug und zumindest einer Oszillationsachse 01 ausgebildet sind. Das Fräswerkzeug rotiert um die Fräsachse, das Drehwerkzeug oszilliert in Richtung der Oszillationsachse 01. Weitere mögliche Freiheitsgrade der einzelnen Werkzeuge sind vorgesehen und in der Figurenbeschreibung näher erläutert.

Bei allen die Oberfläche formgebend bearbeitenden Verfahren ist die Position der Linse relativ zur Werkstückspindel von wesentlicher Bedeutung, da durch diese Bearbeitung die optischen Eigenschaften der Linse geprägt werden. Die kombinierte Bearbeitung in einer einzigen Aufspannung verkürzt und präzisiert jeden einzelnen Bearbeitungsvorgang. Neben der Bearbeitung der Oberfläche, also der optischen Fläche, werden im Weiteren auch andere Flächen der Linse wie bspw. der Rand der Linse bearbeitet. Diese Bearbeitung der Randfläche erfolgt jeweils fräsend und/oder drehend in gleich bleibender Aufspannung.

Ferner ist es vorteilhaft, dass als weitere Bearbeitungseinheit eine Poliereinheit FP mit einem Polierwerkzeug und zumindest einer Polierachse P1, um die das Polierwerkzeug rotiert, vorgesehen ist.

Hierzu ist es vorteilhaft, dass als weitere Bearbeitungseinheit eine Reinigungseinheit R vorgesehen ist, mit der die an der Aufnahme mittel- oder unmittelbar einspannbare Linse zumindest auf der Oberfläche zumindest teilweise zu reinigen ist und die mindestens eine an eine Luft- und/oder Reinigungsmittelleitung angeschlossene Reinigungsdüse zum Reinigen der Linse aufweist. Dadurch, dass auch die Reinigung in gleich bleibender Aufspannung erfolgt, wird einerseits ein zeitaufwendiges Umspannen nicht notwendig, andererseits kann vor und/oder nach der formgebenden Bearbeitung wiederum ohne Umspannen je nach Bedarf eine Zwischenreinigung erfolgen. Das Reinigen schließt das Trocknen der Oberfläche in der Regel mit ein.

Daneben ist es vorteilhaft, dass die Werkstückspindel für die Bearbeitung der Linse zumindest in Richtung der Translationsachse T1 in den Bereich der jeweiligen Bearbeitungseinheit FF, FD, G und FP bringbar ist und/oder mittels der Oszillationsachse 02 zwischen den für die Bearbeitung in den einzelnen Bearbeitungseinheiten FF, FD, G und FP notwendigen Positionen verstellbar ist. Ein Umspannen der Linse bzw. eine Übergabe der Linse von einer Werkstückspindel zu einer anderen ist zum Wechsel der Bearbeitungseinheiten nicht notwendig. Die Linse wird in ein und derselben Aufnahme fertig bearbeitet, sodass sie einsatzfertig ist. Der Poliervorgang erfolgt in der Regel zum Schluss, nach dem Gravieren. In Abhängigkeit des eingesetzten Lasers kann das Polieren auch vor dem Gravieren erfolgen, insbesondere dann, wenn die Gravur nicht sehr tief ist.

Vorteilhaft ist es auch, dass Zeitpunkt, Dauer und/oder Intensität der Bestrahlung der Oberfläche der Linse mit dem Laserstrahl in Abhängigkeit von der Geschwindigkeit und/oder in Abhängigkeit von mindestens einer der Positionen der Werkstückspindel in Bezug auf den Drehwinkel α um die Rotationsachse R1, in Bezug auf die Translationsachse T1 und/oder in Bezug auf die Oszillationsachse 02 regelbar sind. Dadurch wird erreicht, dass für die Gravur die relativ zu dem Bezugskoordinatensystem der Antriebseinheit bekannten Ist-Werte der Position der Linse zur Steuerung und Regelung der gravierenden Einheit G eingesetzt werden können.

Außerdem ist es vorteilhaft, dass zumindest der Laserstrahl zum Gravieren der Linse mit Bezug zur Richtung der Translationsachse T1 zumindest teilweise in einer Ebene zwischen dem Drehwerkzeug und dem Fräswerkzeug oder zwischen dem Fräswerkzeug und der Reinigungsdüse oder zwischen der Reinigungsdüse und einer Polierspindel angeordnet ist. Dadurch wird erreicht, dass je nach Ausgestaltung und Dimension der einzelnen Bearbeitungseinheiten die gravierende Einheit G an den Positionen angeordnet werden kann, an denen ausreichend Platz zur Verfügung steht. Je nach Platzsituation kommt eine Umlenkung des Laserlichts in Betracht. Alternativ kann auch die gravierende Einheit G entsprechend positioniert sein, sodass eine Umlenkung entfallen kann.

Ferner ist es vorteilhaft, dass die zweite Bearbeitungseinheit G einen zwischen 9000 nm und 11000 nm arbeitenden CO₂-Laser, einen im UV-Spektrum zwischen 100 nm und 360 nm arbeitenden Excimer-Laser, einen zwischen 350 nm und 1100 nm arbeitenden ND:YAG-Laser oder einen zwischen 350 nm und 1100 nm arbeitenden Faser-Laser aufweist. Die Wahl des Lasers hängt insbesondere von der Transmissionsfähigkeit des verwendeten Linsenmaterials ab. Der Laserstrahl schmilzt die Oberfläche der Linse punktuell auf und lässt den Kunststoff der Linse teilweise verdampfen. An dem dadurch entstehenden Kraterrand wird der Kunststoff aufgeworfen. Je nach Laserart lässt sich die punktuell eingebrachte Energie besser oder schlechter steuern. Dies wiederum hat zur Folge, dass der Durchmesser, die Tiefe, die Neigung der Flanke und der Aufwurf stark variieren. Gewünscht sind ein kleiner Durchmesser, eine steile Flanke und möglichst wenig Aufwurf. Je nach gewünschter Qualität können deshalb in einer Bearbeitungsmaschine verschiedene Laserquellen zum Einsatz kommen.

Alternativ ist es vorteilhaft, dass die gravierende Einheit G mindestens eine Fokussiereinheit und zumindest einen regel- und steuerbaren Ablenkungsspiegel für den Laserstrahl aufweist. Dadurch wird erreicht, dass zum Gravieren nicht nur die Linse rotiert und die Werkstückspindel in Richtung der Translationsachse T1 verstellt wird, sondern dass zusätzlich oder alternativ zu einer oder beider dieser Maßnahmen der Laserstrahl abgelenkt und somit die Position der Gravur auf der Linse beeinflusst wird. Die Fokussiereinheit dient dazu, den Energieeintrag zu verändern und einen optimalen Brennpunkt des Laserstrahls zu erzeugen und diesen Brennpunkt zumindest in einer Richtung rechtwinklig zu der Oberfläche der Linse zu verstellen.

Es ist ferner vorgesehen, dass die Positionen der Fokussiereinheit und/oder des Ablenkungsspiegels in Abhängigkeit von der Geschwindigkeit und/oder in Abhängigkeit von mindestens einer der Positionen der Werkstückspindel in Bezug auf den Drehwinkel α um die Rotationsachse R1 und/oder in Bezug auf die Translationsachse T1 und/oder in Bezug auf die Oszillationsachse 02 regelbar sind. Dadurch wird erreicht, dass für die Gravur die relativ zu dem Bezugskoordinatensystem der Antriebseinheit bekannten Ist-Werte der Position der Linse zur Steuerung und Regelung der gravierenden Einheit G eingesetzt werden können. Es ist auch vorgesehen, die Werkstückspindel und die Linse stationär zu positionieren und die Bewegung des Lasers über die Ablenkeinheit zu gewährleisten.

Hierzu ist es vorteilhaft, dass zum Gravieren die Laserquelle um mindestens eine Achse schwenkbar und/oder in Richtung mindestens einer Achse verschiebbar und die Position regelbar ist.

Dabei ist es von Vorteil, dass der Oszillationsachse 01 des Werkzeugs bzw. des Drehmeißels ein Oszillationsantrieb zugeordnet ist, der mit einer Oszillationsfrequenz zwischen 25 Hz und 300 Hz, bevorzugt zwischen 75 Hz und 150 Hz bewegbar und steuerbar oder regelbar ist. Insbesondere bei hochfrequenten Linsendrehmaschinen ist eine größtmögliche Präzision erforderlich. Diese Präzision wird durch die gleich bleibende Einspannung, die Fehler bei einer Werkstückübergabe ausschließt, unterstützt.

Gelöst wird die Aufgabe auch durch ein Verfahren zum Bearbeiten zumindest einer Oberfläche einer optischen Linse aus Kunststoff, wobei die Linse in eine Aufnahme einer Werkstückspindel einer erfindungsgemäßen Bearbeitungsmaschine eingespannt ist. Das Verfahren weist folgende mittel- oder unmittelbar nacheinander ablaufende Verfahrensschritte auf: das Einspannen der Linse in die Aufnahme, die Positionierung der Werkstückspindel in Bezug auf die erste Bearbeitungseinheit F zum formgebenden Bearbeiten der Oberfläche der Linse, eine erste formgebende Bearbeitung zumindest eines Teils der Oberfläche der Linse durch die erste formgebende Bearbeitungseinheit F, vorzugsweise die Fräseinheit FF oder die Dreheinheit FD, die Positionierung der Werkstückspindel in Bezug auf die zweite Bearbeitungseinheit G zum der Oberfläche der Linse und Gravieren zumindest eines Teils der Oberfläche der Linse mit einem Gravierwerkzeug oder einem Laserstrahl, wobei die Linse zumindest über die Werkstückspindel gehalten und/oder positioniert wird.

Das Verfahren ermöglicht es, dass die Linse zumindest für die formgebende Bearbeitung und zum Gravieren in ein und derselben Aufnahme verbleibt. Dadurch wird erreicht, dass die Position der zu Beginn der Bearbeitung eingespannten Linse in Bezug auf die Aufnahme an der Werkstückspindel für die ausgehend vom Linsenrohling wichtigsten, zur Bearbeitung notwendigen Bearbeitungsschritte gleich bleibt. Dies lässt weitere Verfahrensschritte bis hin zur Komplettbearbeitung der Linse einschließlich Reinigen und Polieren zu.

Eine zeitaufwendige neue Positionsbestimmung der Linse, wie es beim Umspannen zwangsläufig notwendig wäre, entfällt. Alle die absolute Position der zu bearbeitenden Linse betreffenden Ist-Werte stehen ohne die beim Umspannen auftretenden Übergabeverluste während des gesamten Bearbeitungsverfahrens zur Verfügung, sodass neben der Zeitersparnis gleichzeitig ein optimaler Gravierprozess gewährleistet werden kann. Zudem wird keine Zeit und keine Arbeitskraft für das Umspannen der Linse selbst benötigt.

Für die weitere Bearbeitung der Linse ist es von Vorteil, dass die erste formgebende Bearbeitung gemäß Schritt c) durch die Fräseinheit FF und das Fräswerkzeug erfolgt, wobei nach der ersten formgebenden Bearbeitung mindestens eine weitere formgebende Bearbeitung in der Dreheinheit FD mit dem Drehwerkzeug vorgesehen ist. Die Linse wird bevorzugt zuerst fräsend bearbeitet, darauf folgend gedreht und anschließend poliert. Es ist vorgesehen, zwischen diesen Verfahrensschritten einen oder mehrere weitere Verfahrensschritte wie bspw. das Reinigen einzugliedern. Je nach verwendetem Rohling kann auch auf das Fräsen verzichtet werden, so dass nur gedreht wird und der weitere formgebende Bearbeitungsschritt entfällt.

Hierzu ist es von Vorteil, dass zumindest vor und/oder nach dem Gravieren die Positionierung der Werkstückspindel in Bezug auf eine Reinigungseinheit R zum Reinigen der Oberfläche der Linse und das Reinigen zumindest eines Teils der Oberfläche der Linse vorgesehen ist. Eine präzise Bearbeitung ist gerade im Mikrometerbereich nur möglich, wenn die zu bearbeitende Fläche möglichst frei von Fett, Staub und Ablagerungen ist, die die Gravierbedingungen beeinflussen könnten. Mit dem Reinigen ist auch ein Trocknen der Oberfläche verbunden, da die Oberflächenbeschaffenheit sehr großen Einfluss auf den dem Gravieren zu Grunde liegenden Anschmelzvorgang hat. Durch die fortwährend gleiche Einspannung ist es jederzeit möglich, die Linse zu reinigen, ohne die Bezugsdaten zu verlieren.

Auch ist es von Vorteil, dass zumindest vor und/oder nach dem Gravieren die Positionierung der Werkstückspindel in Bezug auf eine Poliereinheit FP zum Polieren der Oberfläche der Linse und das Polieren zumindest eines Teils der Oberfläche der Linse vorgesehen ist. Je nach Umfang der durch den Polierprozess notwendigen Korrekturen der optischen Oberfläche der Linse stehen die exakten Daten der Oberflächenkontur zur Verfügung, um einen oder mehrere Teilbereiche der Oberfläche mehr oder weniger zu bearbeiten.

Weitere Vorteile und Einzelheiten der Erfindung sind in den Patentansprüchen und in der Beschreibung erläutert und in den Figuren dargestellt.

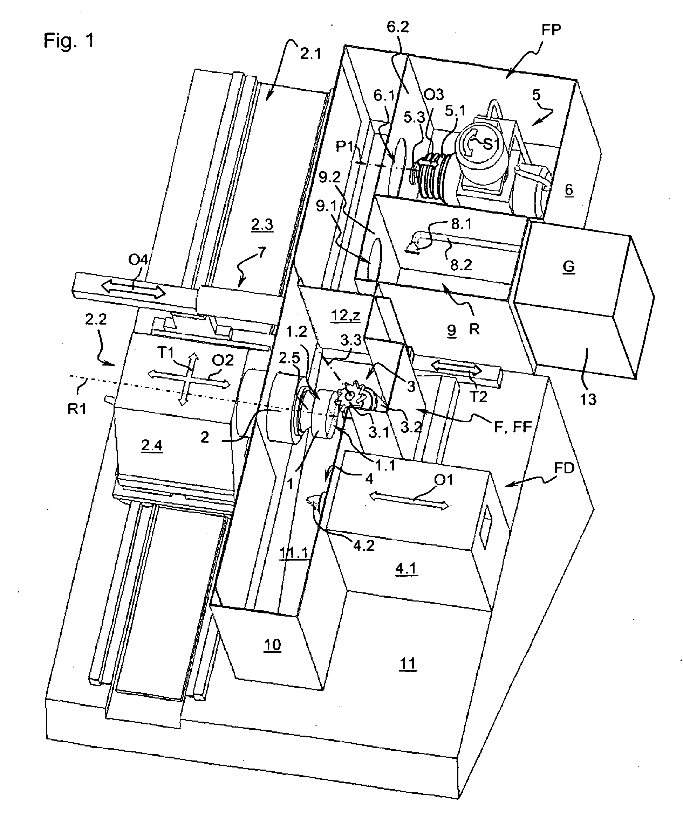

In Figur 1 bis Figur 6 sind perspektivische Ansichten einer Bearbeitungsmaschine dargestellt, in denen die Werkstückspindel jeweils an verschiedenen Positionen angeordnet ist.

Die in Figur 1 dargestellte Bearbeitungsmaschine weist ein Maschinenbett 11 auf, auf dem eine in Richtung einer Translationsachse T1 verfahrbare Werkstückspindel 2, eine formgebende Einheit FF mit einem Fräswerkzeug 3, eine formgebende Einheit FD mit einem Drehwerkzeug 4, eine gravierende Einheit G mit einer Graviervorrichtung 13 und eine formgebende Einheit FP mit einem Polierwerkzeug 5 angeordnet sind.

Die Werkstückspindel 2 weist eine Rotationsachse R1 auf und ist über einen als Linearantrieb ausgebildeten Translationsantrieb 2.2 in Richtung der Translationsachse T1 ver-und positionierbar. Der Linearantrieb 2.2 ist dabei aus einem Stator bzw. Sekundärteil 2.3 und einem Aktor bzw. Primärteil 2.4 gebildet und auf dem Maschinenbett 11 über eine als Schienenpaar ausgebildete Führung 2.1 gelagert. Die Werkstückspindel 2 dient der Aufnahme einer Linse 1 zwecks Bearbeitung einer ersten und mindestens einer weiteren Oberfläche 1.1, 1.2 in den vorgesehenen Bearbeitungseinheiten FD, FF, G und FP.

Zudem weist der Translationsantrieb 2.2 bzw. der Aktor 2.4 eine Oszillationsachse 02 auf, die rechtwinklig zur Translationsachse T1 verläuft. Über die Oszillationsachse 02 kann die Spindel 2 mit der Linse 1, insbesondere bei der fräsenden Bearbeitung mit dem Fräswerkzeug 3, in axialer Richtung zur Linse 1 hin und her bewegt werden. Daneben ist der Einsatz dieser Oszillationsachse 02 auch zum Anfahren des Polierwerkzeugs 5 vorgesehen.

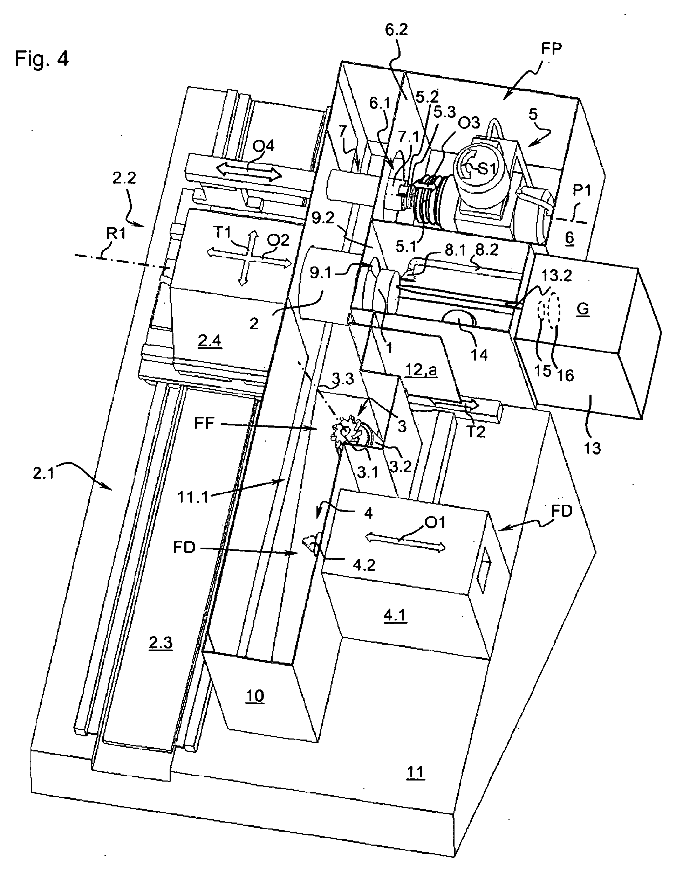

An den Linearantrieb 2.2 ist zudem eine Wechselvorrichtung 7 für ein Polierelement 5.2 gekoppelt. Das Polierelement 5.2 wird dabei über einen Wechselkopf 7.1 der Wechselvorrichtung 7 gehalten und vor dem Polierprozess gemäß Figur 4 an das Polierwerkzeug 5 bzw. eine Polierelementaufnahme 5.3 übergeben. Zwecks Übergabe des Polierelementes 5.2 weist die Wechselvorrichtung 7 eine Oszillationsachse 04 auf, die parallel zur Oszillationsachse 02 angeordnet ist.

Neben der Werkstückspindel 2 sind die verschiedenen Bearbeitungseinheiten, die formgebende Einheit FF mit einem Fräswerkzeug 3, die formgebende Einheit FD mit einem Drehwerkzeug 4, die gravierende Einheit G mit einer Graviervorrichtung 13 und die formgebende Einheit FP mit einem Polierwerkzeug 5, vorgesehen, die mit Bezug zur Translationsachse T1 nacheinander und gegenüberliegend zur Werkstückspindel 2 auf dem Maschinenbett 11 angeordnet sind.

Die Werkstückspindel 2 wird mit der eingespannten Linse 1 für den ersten Bearbeitungsschritt an bzw. in den Bereich des Fräswerkzeugs 3 verfahren. Das Fräswerkzeug 3 weist eine Frässpindel 3.2 mit einem Fräskopf 3.1 auf. Die Frässpindel 3.2 bzw. der Fräskopf 3.1 sind in Richtung einer Fräsachse 3.3 ausgerichtet, die mit Bezug zu einer nicht dargestellten Flächennormalen des Maschinenbetts 11 geneigt verlaufend angeordnet ist. Zwecks Bearbeitung der Linse 1 rotiert diese um die Rotationsachse R1 der Werkstückspindel 2 und wird in Richtung der Translationsachse T1 bewegt, sodass der sich drehende Fräskopf 3.1 radial von außen nach innen die in der Regel torische erste Oberfläche 1.1 der Linse 1 spanend vorbearbeitet. Daneben wird die weitere Oberfläche 1.2, die Außenfläche der Linse 1, durch den Fräskopf 3.1 bearbeitet.

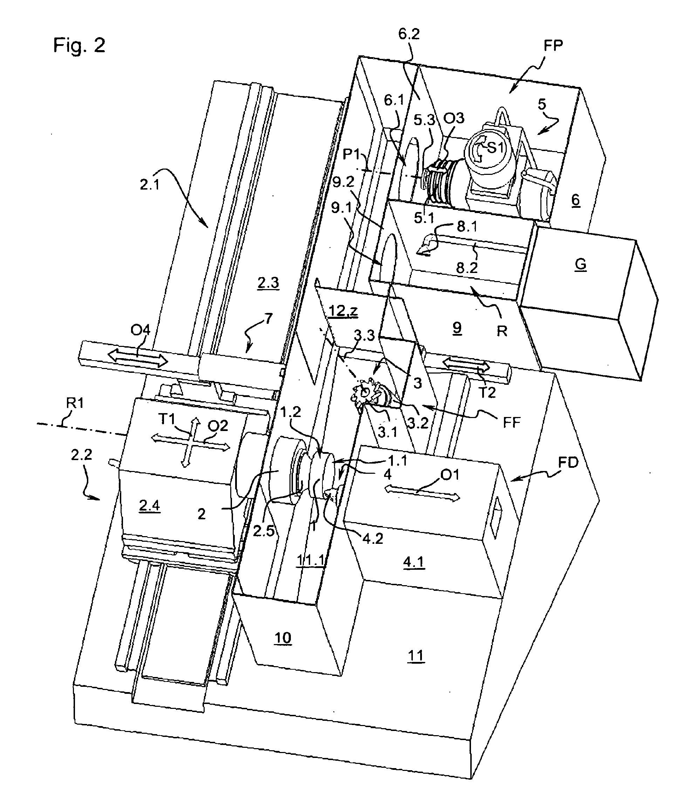

Nach dem fräsenden Bearbeiten gemäß Figur 1 wird die Werkstückspindel 2 gemäß Figur 2 in eine die drehende Bearbeitung gewährleistende Position verfahren. Zwecks drehender Bearbeitung rotiert die Linse 1 wiederum um die Rotationsachse R1 der Werkstückspindel 2, während die in der Regel torische Form der ersten Oberfläche 1.1 durch entsprechend hochfrequente Oszillationsbewegungen des Werkzeuges 4 bzw. Drehmeißels 4.2 in seiner Oszillationsachse O1 generiert wird. Die erste Oberfläche 1.1 wird dabei ebenfalls von außen nach innen bearbeitet, was durch eine entsprechende translatorische Bewegung der Werkstückspindel 2 über die Translationsachse T1 erreicht wird.

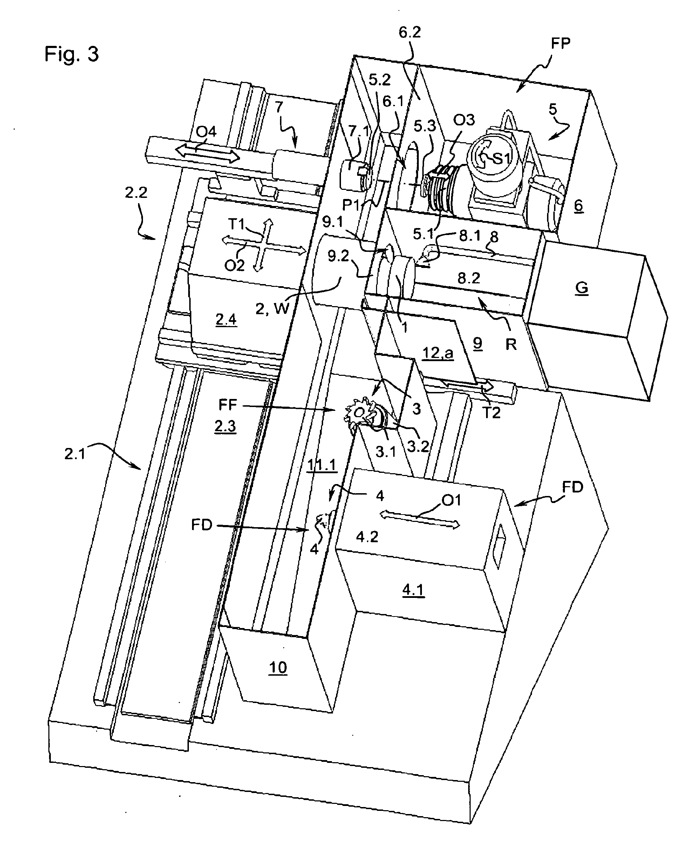

Die Bearbeitungszone für die fräsende und die drehende Bearbeitung innerhalb dieser Bearbeitungsmaschine wird durch eine Trennwand 10 sowie eine Spritzschutzwand 12 begrenzt. Nach unten wird dieser Bearbeitungsraum durch das Maschinenbett 11 bzw. einen hier nicht weiter dargestellten Spanraum 11.1 begrenzt. Die Spritzschutzwand 12 ist dabei in Richtung einer Translationsachse T2 zwischen einer den Beabreitungsraum verschließenden Position z und einer den Bearbeitungsraum nach oben hin freigebenden Position a gemäß Figur 3 verschiebbar.

Nach dem drehenden Bearbeiten der Linse 1 gemäß Figur 2 wird die Werkstückspindel 2 bei geöffneter Spritzschutzwand 12 gemäß Figur 3 in den Bereich einer unmittelbar hinter der Spritzschutzwand 12 angeordneten Reinigungseinheit R verfahren. Die Reinigungseinheit R weist eine Reinigungsdüse 8.1 mit einer Reinigungsmittelleitung 8.2 auf und ist über eine eine Reinigungskammer bildende Spritzschutzeinrichtung 9 innerhalb der Bearbeitungsmaschine gekapselt. Die Reinigungskammer 9 weist mehrere Spritzschutzwände auf, wobei eine der Werkstückspindel 2 zugewandte Wand 9.2 eine runde Ausnehmung 9.1 aufweist, durch die die Linse 1 bzw. die Werkstückspindel 2 einbringbar ist. Zum Reinigen wird die Linse 1 über die Oszillationsachse 02 der Werkstückspindel 2 in den Bereich bzw. auf die Höhe der Reinigungsdüse 8.1 gebracht.

Nach dem Reinigen wird die Linse 1 gemäß Figur 4 graviert. Das Gravieren erfolgt mit Bezug zur Translationsachse T1 vorzugsweise in der Position der Werkstückspindel 2, in der auch das Reinigen erfolgt war. Die Positionierbewegungen bezüglich des Ausrichtens auf einen Laserstrahl 13.2 sind hiervon ausgenommen. Zwecks Ausrichtung der Linse 1 relativ zum Laserstrahl 13.2 bzw. zwecks Fokussierung des Laserstrahls 13.2 wird die Linse 1 zusätzlich über die Oszillationsachse 02 und/oder die Rotationsachse R1 bewegt. Die Relativbewegung für den Graviervorgang als solchen erfolgt vorzugsweise laserseitig. Der Laserstrahl 13.2 wird somit über zumindest einen Teil der Oberfläche 1.1 der Linse 1 geführt. Da die Linse 1 gekrümmt ist, sind verschiedene Punkte auf der Oberfläche 1.1 der Linse 1 mit Bezug zur Oszillationsachse 02 bzw. zur Richtung des Laserstrahls 13.2 unterschiedlich weit von einer Laserquelle 13.1 entfernt. Während des Graviervorgangs kann es demnach vorgesehen sein, die Linse 1 über die Oszillationsachse 02 relativ zum Laser 13.1 auszurichten. Die hierfür notwendige Dynamik ist durch die Oszillationsachse 02 gewährleistet. Die Reinigungskammer weist bodenseitig eine Gasabsauganlage auf, die die beim Gravieren entstehenden Dämpfe absaugt. Ergänzend oder alternativ kann auch Schutzgas in die Reinigungskammer eingebracht werden, um den Graviervorgang zu verbessern bzw. insbesondere die Bildung von Ozon zu verhindern.

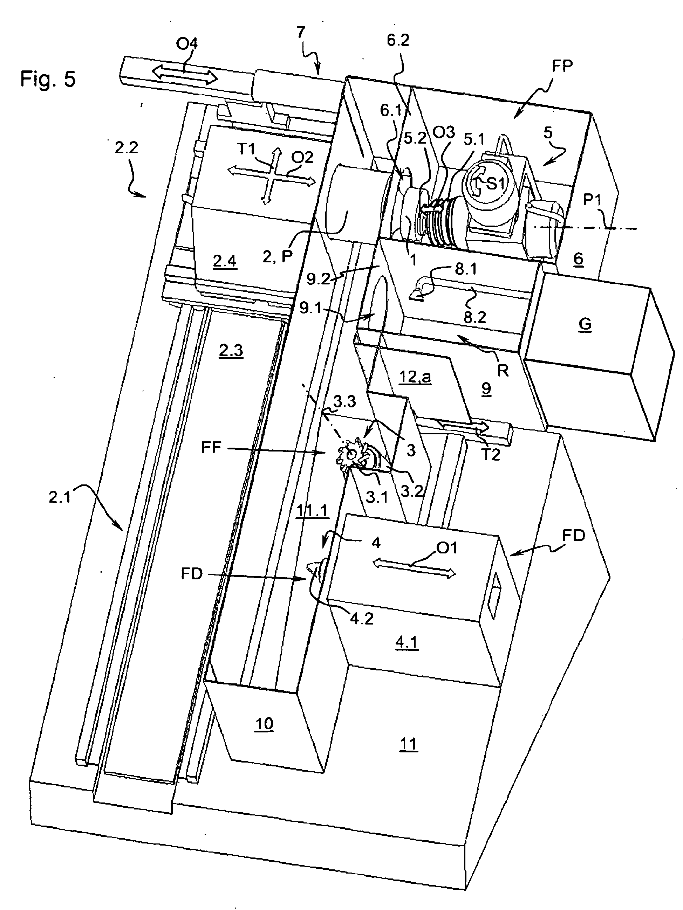

Nach dem Gravieren der Linse 1 in der Graviereinheit G wird die Werkstückspindel 2 gemäß Figur 5 in den Bereich des Polierwerkzeugs 5 verfahren. Über die Oszillationsachse 02 wird die Linse 1 in einen Bearbeitungsbereich bzw. in eine Polierkammer 6 gebracht. Die Polierkammer 6 wird im Wesentlichen durch eine mehrere Spritzschutzwände aufweisende Spritzschutzeinrichtung gebildet, die den Polierprozess von den zuvor genannten Bearbeitungsprozessen abschottet.

Das Polierwerkzeug 5 weist eine Oszillationsachse 03 auf, die beim Polierprozess die in axialer Richtung notwendigen Polierbewegungen auf der um die Rotationsachse R1 rotierenden Linse 1 bzw. deren ersten Oberfläche 1.1 gewährleistet. Darüber hinaus weist das Polierwerkzeug 5 eine Schwenkachse S1 auf, die rechtwinklig zur Oszillationsachse 03 angeordnet ist und im Wesentlichen die radiale Bewegung des Polierwerkzeugs 5 auf der ersten Oberfläche 1.1 gewährleistet. Zudem weist das Polierwerkzeug 5 eine Polierachse P1 auf, um die das Polierelement 5.2 rotiert. Die Rotation um die Polierachse P1 und die Schwenkbewegung um die Schwenkachse S1 bilden die Polierbewegung des Polierwerkzeugs 5, wobei die Oszillation in Richtung der Oszillationsachse 03 die Anlage des Polierwerkzeugs 5 auf der Linsenoberfläche 1.1 gewährleistet. Zusätzlich oder alternativ hierzu kann die Linse 1 um die Rotationsachse R1 der Werkstückspindel 2 rotieren und/oder in Richtung der Translationsachse T1 verfahren. Die Überlagerung vorgenannter Bewegungen des Polierwerkzeugs 5 einerseits und der Linse 1 andererseits bilden die Polierbewegung.

Die Polierkammer bzw. Spritzschutzeinrichtung 6 weist ebenso wie die Spritzschutzeinrichtung 9 in einer der Werkstückspindel 2 zugewandten Seite bzw. Wand 6.2 eine Ausnehmung 6.1 auf, durch die die Linse 1 bzw. die Werkstückspindel 2 in die Polierkammer 6 eingebracht wird. Der Spalt zwischen der Ausnehmung 6.1, 9.1 und der Werkstückspindel 2 wird durch einen nicht dargestellten Faltbalg verschlossen, der eine den Polierprozess bzw. Reinigungsprozess gewährleistende Translation der Werkstückspindel 2 in Richtung der Translationsachse T1 zulässt und den Spalt zwischen der Werkstückspindel 2 und der Wand 6.2, 9.2 weitestgehend verschließt.

Nach dem Polieren der Linse 1 wird diese gemäß Figur 3 noch einmal innerhalb der Reinigungseinheit R gereinigt.

Anschließend wird die fertig bearbeitete Linse 1 aus einer Aufnahme 2.5 ausgespannt und ein neuer Linsenrohling in die Aufnahme 2.5 eingespannt.

### Bezugszeichenliste

- 1: Linse
- 1.1: erste Oberfläche
- 1.2: weitere Oberfläche, Außenfläche
- 2: Werkstückspindel
- 2.1: Führung, Schiene
- 2.2: Translationsantrieb, Linearantrieb
- 2.3: Stator, Sekundärteil
- 2.4: Aktor, Primärteil
- 2.5: Aufnahme
- 3: Fräswerkzeug
- 3.1: Fräskopf
- 3.2: Frässpindel
- 3.3: Fräsachse
- 4: Drehwerkzeug
- 4.1: Oszillationsantrieb
- 4.2: Drehmeißel
- 5: Polierwerkzeug
- 5.1: Polierspindel
- 5.2: Polierelement
- 5.3: Polierelementaufnahme
- 6: Spritzschutzeinrichtung, Polierkammer
- 6.1: Aussparung
- 6.2: Seite, Wand
- 7: Wechselvorrichtung
- 7.1: Wechselkopf
- 8.1: Reinigungsdüse
- 8.2: Reinigungsmittelleitung
- 9: Spritzschutzeinrichtung, Reinigungskammer
- 9.1: Aussparung
- 9.2: Seite, Wand
- 10: Trennwand
- 11: Maschinenbett
- 11.1: Spanraum
- 12: Spritzschutzwand
- 13: Graviervorrichtung
- 13.1: Laserquelle, CO₂-Laser, Excimer-Laser
- 13.2: Laserstrahl
- 14: Gasabsauganlage
- 15: Fokussiereinheit
- 16: Ablenkungsspiegel
- a: Position Spritzschutzwand
- F: erste formgebende Bearbeitungseinheit
- FD: Dreheinheit
- FF: Fräseinheit
- FP: Poliereinheit
- G: zweite Bearbeitungseinheit Gravieren
- 01: Oszillationsachse Schneidwerkzeug
- 02: Oszillationsachse Werkstückspindel
- 03: Oszillationsachse Polierwerkzeug
- 04: Oszillationsachse Wechselvorrichtung
- P1: Polierachse
- R: Reinigungseinheit
- R1: Rotationsachse
- S1: Schwenkachse
- T1: Translationsachse, Spindel
- T2: Translationsachse, Spritzschutzwand
- z: Position Spritzschutzwand

## Patentansprüche

1. Bearbeitungsmaschine zum Bearbeiten einer optischen Linse (1) aus Kunststoff mit einer um eine Rotationsachse R1 rotierenden Werkstückspindel (2) und mindestens einer ersten formgebenden Bearbeitungseinheit F und mindestens einer zweiten Bearbeitungseinheit G, wobei
a) die Werkstückspindel (2) eine Aufnahme (2.5) für die Linse (1) aufweist und zumindest in Richtung einer rechtwinklig zur Rotationsachse R1 verlaufenden Translationsachse T1 linear bewegbar gelagert ist,
b) die an der Aufnahme (2.5) mittel- oder unmittelbar einspannbare Linse (1) durch die erste Bearbeitungseinheit F zumindest auf einer Oberfläche (1.1) zumindest teilweise über ein Werkzeug (3, 4) spanend bearbeitbar ist,
**dadurch gekennzeichnet,**
**dass** die zweite Bearbeitungseinheit eine die Linse (1) auf der Oberfläche (1.1) gravierende Einheit G ist und die Linse (1) zumindest für das formgebende Bearbeiten und für das Gravieren in der Aufnahme (2.5) der Werkstückspindel (2) mittel- oder unmittelbar einspannbar ist, wobei die gravierende Einheit G eine Graviervorrichtung (13) mit einer Laserquelle (13.1) und Vorrichtungen zum Erzeugen eines Laserstrahls (13.2) zum Herstellen einer Lasergravur auf der Linse (1) aufweist.

2. Bearbeitungsmaschine nach Anspruch 1,
**dadurch gekennzeichnet,**
**dass** die Werkstückspindel (2) in Richtung einer Oszillationsachse 02 rechtwinklig zu der Translationsachse T1 bewegbar gelagert und regelbar ist.

3. Bearbeitungsmaschine nach einem der vorhergehenden Ansprüche,
**dadurch gekennzeichnet,**
**dass** die erste Bearbeitungseinheit F als Fräseinheit FF mit dem Fräswerkzeug (3) und zumindest einer Fräsachse 3.3 und/oder als Dreheinheit FD mit dem Drehwerkzeug (4) und zumindest einer Oszillationsachse O1 ausgebildet sind.

4. Bearbeitungsmaschine nach einem der vorhergehenden Ansprüche,
**dadurch gekennzeichnet,**
**dass** als weitere Bearbeitungseinheit eine Poliereinheit FP mit einem Polierwerkzeug (5) und zumindest einer Polierachse P1 vorgesehen ist.

5. Bearbeitungsmaschine nach einem der vorhergehenden Ansprüche,
**dadurch gekennzeichnet,**
**dass** als weitere Bearbeitungseinheit eine Reinigungseinheit R vorgesehen ist, mit der die an der Aufnahme (2.5) mittel- oder unmittelbar einspannbare Linse (1) zumindest auf der Oberfläche (1.1) zumindest teilweise zu reinigen ist und die mindestens eine an eine Luft- und/oder Reinigungsmittelleitung (8.2) angeschlossene Reinigungsdüse (8.1) zum Reinigen der Linse (1) aufweist.

6. Bearbeitungsmaschine nach einem der vorhergehenden Ansprüche,
**dadurch gekennzeichnet,**
**dass** die Werkstückspindel (2) für die Bearbeitung der Linse (1) zumindest in Richtung der Translationsachse T1 in den Bereich der jeweiligen Bearbeitungseinheit FF, FD, G und FP bringbar ist und/oder mittels der Oszillationsachse 02 zwischen den für die Bearbeitung in den einzelnen Bearbeitungseinheiten notwendigen Positionen verstellbar ist.

7. Bearbeitungsmaschine nach einem der vorhergehenden Ansprüche,
**dadurch gekennzeichnet,**
**dass** Zeitpunkt, Dauer und/oder Intensität der Bestrahlung der Oberfläche (1.1) der Linse (1) mit dem Laserstrahl (13.2) in Abhängigkeit von der Geschwindigkeit und/oder in Abhängigkeit von mindestens einer der Positionen der Werkstückspindel (2) in Bezug auf
a) den Drehwinkel α um die Rotationsachse R1 und/oder
b) die Translationsachse T1 und/oder
c) die Oszillationsachse 02
regelbar sind.

8. Bearbeitungsmaschine nach einem der vorhergehenden Ansprüche,
**dadurch gekennzeichnet,**
**dass** zumindest der Laserstrahl (13.2) zum Gravieren der Linse (1) mit Bezug zur Richtung der Translationsachse T1 zumindest teilweise in einer Ebene zwischen dem Drehwerkzeug (4) und dem Fräswerkzeug (3) oder zwischen dem Fräswerkzeug (3) und der Reinigungsdüse (8.1) oder zwischen der Reinigungsdüse (8.1) und einer Polierspindel (5.1) platzierbar ist.

9. Bearbeitungsmaschine nach einem der vorhergehenden Ansprüche,
**dadurch gekennzeichnet,**
**dass** die zweite Bearbeitungseinheit G einen CO₂-Laser (13.1), ein Excimer-Laser (13.1), eine Faser-Laser oder einen Nd:YAG-Laser aufweist.

10. Bearbeitungsmaschine nach einem der vorhergehenden Ansprüche,
**dadurch gekennzeichnet,**
**dass** die gravierende Einheit G mindestens eine Fokussiereinheit (15) und zumindest einen regel- und steuerbaren Ablenkungsspiegel (16) für den Laserstrahl (13.2) aufweist.

11. Bearbeitungsmaschine nach Anspruch 10,
**dadurch gekennzeichnet,**
**dass** die Positionen der Fokussiereinheit (15) und/oder des Ablenkungsspiegels (16) in Abhängigkeit von der Geschwindigkeit und/oder in Abhängigkeit von mindestens einer der Positionen der Werkstückspindel (2) in Bezug auf
a) den Drehwinkel α um die Rotationsachse R1 und/oder
b) die Translationsachse T1 und/oder
c) die Oszillationsachse 02
regelbar sind.

12. Bearbeitungsmaschine nach einem der vorhergehenden Ansprüche,
**dadurch gekennzeichnet,**
**dass** die Laserquelle (13.1) zum Gravieren um mindestens eine Achse schwenkbar und/oder in Richtung mindestens einer Achse verschiebbar und die Position regelbar ist.

13. Bearbeitungsmaschine nach einem der vorhergehenden Ansprüche,
**dadurch gekennzeichnet,**
**dass** der Oszillationsachse O1 des Drehwerkzeugs (4) ein Oszillationsantrieb (4.1) zugeordnet ist, der mit einer Oszillationsfrequenz zwischen 25 Hz und 300 Hz, bevorzugt zwischen 75 Hz und 150 Hz, bewegbar und steuerbar oder regelbar ist.

14. Bearbeitungsmaschine nach einem der vorhergehenden Ansprüche,
**dadurch gekennzeichnet,**
**dass** eine Gasabsauganlage (14) im Bereich der Graviereinheit G vorgesehen ist.

15. Verfahren zum Bearbeiten zumindest einer Oberfläche (1.1) einer optischen Linse (1) aus Kunststoff, unter Verwendung einer Bearbeitungsmaschine nach einem der vorhergehenden Ansprüche, wobei die Linse (1) in die Aufnahme (2.5) der Werkstückspindel (2) der Bearbeitungsmaschine eingespannt ist und die Bearbeitungsmaschine mindestens zwei Bearbeitungseinheiten F, G aufweist,
mit folgenden mittel- oder unmittelbar nacheinander ablaufende Verfahrensschritte:
a) Einspannen der Linse (1) in die Aufnahme (2.5);
b) Positionierung der Werkstückspindel (2) in Bezug auf die erste Bearbeitungseinheit F zum formgebenden Bearbeiten der Oberfläche (1.1) der Linse (1);
c) formgebende Bearbeitung zumindest eines Teils der Oberfläche (1.1) der Linse (1) durch die erste formgebende Bearbeitungseinheit F;
**gekennzeichnet durch** die
d) Positionierung der Werkstückspindel (2) in Bezug auf die zweite Bearbeitungseinheit G zum Gravieren zumindest eines Teils der Oberfläche (1.1) der Linse (1);
e) Gravieren der Oberfläche (1.1) der Linse (1) mit einem Laserstrahl (13.2), wobei die Linse zumindest über die Werkstückspindel (2) gehalten und/oder positioniert wird.

16. Verfahren nach Anspruch 15,
**dadurch gekennzeichnet,**
**dass** die erste formgebende Bearbeitung gemäß Schritt c) durch die Fräseinheit FF und das Fräswerkzeug (3) erfolgt, wobei nach der ersten formgebenden Bearbeitung mindestens eine weitere formgebende Bearbeitung in der Dreheinheit FD mit dem Drehwerkzeug (4) vorgesehen ist.

17. Verfahren nach einem der Ansprüche 15 oder 16,
**dadurch gekennzeichnet,**
**dass** zumindest vor und/oder nach dem Gravieren mindestens einer der folgenden Verfahrensschritte vorgesehen ist:
a) Positionierung der Werkstückspindel (2) in Bezug auf eine Reinigungseinheit R zum Reinigen der Oberfläche (1.1) der Linse (1);
b) Reinigen zumindest eines Teils der Oberfläche (1.1) der Linse (1).

18. Verfahren nach einem der Ansprüche 15, 16 oder 17, **dadurch gekennzeichnet,**
**dass** zumindest vor und/oder nach dem Gravieren mindestens einer der folgenden Verfahrensschritte vorgesehen ist:
a) Positionierung der Werkstückspindel (2) in Bezug auf eine Poliereinheit FP zum Polieren der Oberfläche (1.1) der Linse (1) ;
b) Polieren zumindest eines Teils der Oberfläche (1.1) der Linse (1).

## Claims

1. A processing machine for machining a plastic optical lens (1) with a workpiece spindle (2) rotating about an axis of rotation R1 and with at least one first shaping machining unit F and with at least one second machining unit G, wherein
a) the workpiece spindle (2) has a retainer (2.5) for the lens (1) and is supported linearly movably at least in the direction of an axis of translation T1 that is orthogonal to the axis of rotation R1,
b) the lens (1) that is chuckable indirectly or directly in the retainer (2.5) is machinable by the first machining unit F via a tool (3, 4) at least on a surface (1.1) at least partially,
**characterized in that**
the second machining unit is a unit G that engraves the lens (1) on the surface (1.1), and the lens (1) is chuckable indirectly or directly in the retainer (2.5) of the workpiece spindle (2) at least for the shaping process and for the engraving process, wherein the engraving unit G has an engraving device (13) with a laser source (13.1) and devices for generating a laser beam (13.2) for creating a laser engraving on the lens (1).

2. A processing machine according to claim 1,
**characterized in that**
the workpiece spindle (2) is adjustable and supported movably in the direction of an axis of oscillation 02 that is orthogonal to the axis of translation T1.

3. A processing machine according to any one of the preceding claims,
**characterized in that**
the first machining unit F is configured as a milling unit FF with the milling tool (3) and with at least a milling axis 3.3 and/or as a turning unit FD with the turning tool (4) and with at least an axis of oscillation 01.

4. A processing machine according to any one of the preceding claims,
**characterized in that**
a polishing unit FP with a polishing tool (5) and with at least a polishing axis P1 is provided as a further machining unit.

5. A processing machine according to any one of the preceding claims,
**characterized in that**
a cleaning unit R is provided as a further machining unit, by means of which cleaning unit R the lens (1) that is chuckable indirectly or directly in the retainer (2.5) can be cleaned at least on the surface (1.1) at least partially, and which cleaning unit R has at least one cleaning nozzle (8.1) for cleaning the lens (1), said at least one cleaning nozzle (8.1) being connected to an air and/or cleaning agent conduit (8.2).

6. A processing machine according to any one of the preceding claims,
**characterized in that**
for machining the lens (1), the workpiece spindle (2) is movable at least in the direction of the axis of translation T1 to the region of the respective machining unit FF, FD, G and FP and/or is shiftable, by means of the axis of oscillation 02, between the positions that are required for machining in the individual machining units.

7. A processing machine according to any one of the preceding claims,
**characterized in that**
the moment, duration and/or intensity of the irradiation of the surface (1.1) of the lens (1) with the laser beam (13.2) are adjustable in dependence on the speed and/or in dependence on at least one of the positions of the workpiece spindle (2) with respect to
a) the angle of rotation α about the axis of rotation R1 and/or
b) the axis of translation T1 and/or
c) the axis of oscillation 02.

8. A processing machine according to any one of the preceding claims,
**characterized in that**
at least the laser beam (13.2) is positionable for engraving the lens (1) with respect to the direction of the axis of translation T1 at least partially in a plane between the turning tool (4) and the milling tool (3) or between the milling tool (3) and the cleaning nozzle (8.1) or between the cleaning nozzle (8.1) and a polishing spindle (5.1).

9. A processing machine according to any one of the preceding claims,
**characterized in that**
the second machining unit G has a CO₂ laser (13.1), an excimer laser (13.1), a fibre laser, or an Nd:YAG laser.

10. A processing machine according to any one of the preceding claims,
**characterized in that**
the engraving unit G has at least one focussing unit (15) and at least an adjustable and controllable deflection mirror (16) for the laser beam (13.2).

11. A processing machine according to claim 10,
**characterized in that**
the positions of the focussing unit (15) and/or of the deflection mirror (16) are adjustable in dependence on the speed and/or in dependence on at least one of the positions of the workpiece spindle (2) with respect to
a) the angle of rotation α about the axis of rotation R1 and/or
b) the axis of translation T1 and/or
c) the axis of oscillation 02.

12. A processing machine according to any one of the preceding claims,
**characterized in that**
for engraving, the laser source (13.1) is pivoted about at least one axis and/or is displacable in the direction of at least one axis, and the position is adjustable.

13. A processing machine according to any one of the preceding claims,
**characterized in that**
an oscillation drive (4.1) is associated with the axis of oscillation 01 of the turning tool (4), said oscillation drive (4.1) being movable at an oscillation frequency of between 25 Hz and 300 Hz, preferably of between 75 Hz and 150 Hz, and being controllable or adjustable.

14. A processing machine according to any one of the preceding claims,
**characterized in that**
a gas exhaust system (14) is provided in the region of the engraving unit G.

15. A method for machining at least a surface (1.1) of a plastic optical lens (1) using a processing machine according to any one of the preceding claims, wherein the lens (1) is chucked in the retainer (2.5) of the workpiece spindle (2) of the processing machine and the processing machine has at least two machining units F, G, with the following indirectly or directly successive method steps:
a) chucking the lens (1) in the retainer (2.5),
b) positioning the workpiece spindle (2) with respect to the first machining unit F for shaping the surface (1.1) of the lens (1),
c) shaping at least a part of the surface (1.1) of the lens (1) by the first shaping machining unit F,
**characterized by**
d) positioning the workpiece spindle (2) with respect to the second machining unit G for engraving at least a part of the surface (1.1) of the lens (1),
e) engraving the surface (1.1) of the lens (1) by means of a laser beam (13.2),
wherein the lens is retained and/or positioned at least by means of the workpiece spindle (2).

16. A method according to claim 15,
**characterized in that**
the milling unit FF and the milling tool (3) execute the first shaping process according to step c), wherein at least one further shaping process is provided in the turning unit FD with the turning tool (4) after the first shaping process.

17. A method according to any one of claims 15 or 16,
**characterized in that**
at least prior to and/or after the engraving process at least one of the following method steps is provided:
a) positioning the workpiece spindle (2) with respect to a cleaning unit R for cleaning the surface (1.1) of the lens (1),
b) cleaning at least a part of the surface (1.1) of the lens (1).

18. A method according to any one of claims 15, 16 or 17,
**characterized in that**
at least prior to and/or after the engraving process at least one of the following method steps is provided:
a) positioning the workpiece spindle (2) with respect to a polishing unit FP for polishing the surface (1.1) of the lens (1),
b) polishing at least a part of the surface (1.1) of the lens (1).

## Revendications

1. Machine d'usinage pour l'usinage d'une lentille (1) optique en matière plastique avec une broche porte-pièce (2) tournant autour d'un axe de rotation R1 et au moins une première unité d'usinage F de façonnage et au moins une deuxième unité d'usinage G,
a) la broche porte-pièce (2) présentant un logement (2.5) pour la lentille (1) et étant supportée de façon linéairement mobile au moins en direction d'un axe de translation T1 disposé à angle droit par rapport à l'axe de rotation R1,
b) la lentille (1), pouvant être serrée de façon indirecte ou directe sur le logement (2.5), étant usinable par enlèvement de copeaux au moins sur une surface (1.1) au moins partiellement par le biais d'un outil,
**caractérisée en ce que**
la deuxième unité d'usinage est une unité G gravant la lentille (1) sur la surface (1.1), et la lentille (1) peut être serrée indirectement ou directement dans le logement (2.5) de la broche porte-pièce (2) au moins pour l'usinage de façonnage et pour la gravure, l'unité G graveuse présentant un dispositif de gravure (13) avec une source laser (13.1) et des dispositifs pour la production d'un rayon laser (13.2) pour la réalisation d'une gravure au laser sur la lentille (1).

2. Machine d'usinage selon la revendication 1,
**caractérisée en ce que** la broche porte-pièce (2) est supportée de façon mobile et est réglable dans la direction d'un axe d'oscillation 02 à angle droit par rapport à l'axe de translation T1.

3. Machine d'usinage selon une des revendications précédentes,
**caractérisée en ce que**
la première unité d'usinage F est constituée en tant qu'unité de fraisage FF avec l'outil de fraisage (3) et au moins un axe de fraisage 3.3 et/ou en tant qu'unité de tournage FD avec l'outil de tournage (4) et au moins un axe d'oscillation 01.

4. Machine d'usinage selon une des revendications précédentes,
**caractérisée en ce que**,
en tant qu'unité d'usinage supplémentaire, il est prévu une unité de polissage FP avec un outil de polissage (5) et au moins un axe de polissage P1.

5. Machine d'usinage selon une des revendications précédentes,
**caractérisée en ce que**,
en tant qu'unité d'usinage supplémentaire, il est prévu une unité de nettoyage R avec laquelle la lentille (1), pouvant être serrée indirectement ou directement sur le logement (2.5), doit être nettoyée au moins sur la surface (1.1) au moins partiellement, et qui présente au moins une buse de nettoyage (8.1) raccordée à une conduite de produit de nettoyage ou d'air (8.2) pour le nettoyage de la lentille (1).

6. Machine d'usinage selon une des revendications précédentes,
**caractérisée en ce que**
la broche porte-pièce (2) pour l'usinage de la lentille (1) peut, au moins dans la direction de l'axe de translation T1, être amenée dans la zone de l'unité d'usinage respective FF, FD, G et FP et/ou déplacée, au moyen de l'axe d'oscillation 02, entre les positions nécessaires pour l'usinage dans les différentes unités d'usinage.

7. Machine d'usinage selon une des revendications précédentes,
**caractérisée en ce que**
le moment, la durée et/ou l'intensité de l'irradiation de la surface (1.1) de la lentille (1) avec le rayon laser (13.2) sont réglables en fonction de la vitesse et/ou en fonction d'au moins une des positions de la broche porte-pièce (2) par rapport
a) à l'angle de rotation α autour de l'axe de rotation R1 et/ou
b) à l'axe de translation T1 et/ou
c) à l'axe d'oscillation 02.

8. Machine d'usinage selon une des revendications précédentes,
**caractérisée en ce que**
au moins le rayon laser (13.2) destiné à graver la lentille (1) peut, par rapport à la direction de l'axe de translation T1, être placé au moins partiellement dans un plan entre l'outil de tournage (4) et l'outil de fraisage (3) ou entre l'outil de fraisage (3) et la buse de nettoyage (8.1) ou entre la buse de nettoyage (8.1) et une broche de polissage (5.1).

9. Machine d'usinage selon une des revendications précédentes,
**caractérisée en ce que**
la deuxième unité d'usinage G présente un laser CO₂ (13.1), un laser à excimère (13.1), un laser à fibre ou un laser Nd:YAG.

10. Machine d'usinage selon une des revendications précédentes,
**caractérisée en ce que**
l'unité de gravure G présente au moins une unité de focalisation (15) et au moins un miroir de déviation (16), réglable et pilotable, pour le rayon laser (13.2).

11. Machine d'usinage selon la revendication 10,
**caractérisée en ce que**
les positions de l'unité de focalisation (15) et/ou du miroir de déviation (16) sont réglables en fonction de la vitesse et/ou en fonction d'au moins une des positions de la broche porte-pièce (2) par rapport à
a) l'angle de rotation α autour de l'axe de rotation R1 et/ou
b) l'axe de translation T1 et/ou
c) l'axe d'oscillation 02.

12. Machine d'usinage selon une des revendications précédentes,
**caractérisée en ce que**
la source laser (13.1) pour la gravure peut pivoter autour d'au moins un axe et/ou peut être déplacée en direction d'au moins un axe et **en ce que** la position peut être réglée.

13. Machine d'usinage selon une des revendications précédentes,
**caractérisée en ce que**,
à l'axe d'oscillation 01 de l'outil de tournage (4), est affecté un entraînement d'oscillation (4.1) qui peut être déplacé et piloté ou réglé avec une fréquence d'oscillation entre 25 Hz et 300 Hz, de préférence entre 75 Hz et 150 Hz.

14. Machine d'usinage selon une des revendications précédentes,
**caractérisée en ce qu'**il
est prévu une installation d'aspiration des gaz (14) dans le zone de l'unité de gravure G.

15. Procédé d'usinage d'au moins une surface (1.1) d'une lentille (1) optique en matière plastique, avec utilisation d'une machine d'usinage selon une des revendications précédentes, la lentille (1) étant serrée dans le logement (2.5) de la broche porte-pièce (2) de la machine d'usinage, et la machine d'usinage présentant au moins deux unités d'usinage F, G,
avec les étapes de procédé suivantes se déroulant indirectement ou directement les unes après les autres :
a) serrage de la lentille (1) dans le logement (2.5) ;
b) positionnement de la broche porte-pièce (2) par rapport à la première unité d'usinage F pour l'usinage de façonnage de la surface (1.1) de la lentille (1) ;
c) usinage de façonnage d'au moins une partie de la surface (1.1) de la lentille (1) par la première unité d'usinage F de façonnage ;
**caractérisé par**
d) le positionnement de la broche porte-pièce (2) par rapport à la deuxième unité d'usinage G pour la gravure d'au moins une partie de la surface (1.1) de la lentille (1) ;
e) la gravure de la surface (1.1) de la lentille (1) avec un rayon laser (13.2), la lentille (1) étant retenue et/ou positionnée au moins par le biais de la broche porte-pièce (2).

16. Procédé selon la revendication 15,
**caractérisé en ce que**
le premier usinage de façonnage est effectué selon l'étape c) par l'unité de fraisage FF et par l'outil de fraisage (3), au moins un autre usinage de façonnage étant prévu, après le premier usinage de façonnage, dans l'unité de tournage FD avec l'outil de tournage (4).

17. Procédé selon une des revendications 15 ou 16,
**caractérisé en ce que**,
au moins avant et/ou après la gravure, au moins une des étapes de procédé suivantes est prévue :
a) positionnement de la broche porte-pièce (2) par rapport à une unité de nettoyage R pour le nettoyage de la surface (1.1) de la lentille (1) ;
b) nettoyage d'au moins une partie de la surface (1.1) de la lentille (1).

18. Procédé selon une des revendications 15, 16 ou 17,
**caractérisé en ce que**
au moins avant et/ou après la gravure, au moins une des étapes de procédé suivantes est prévue :
a) positionnement de la broche porte-pièce (2) par rapport à une unité de polissage FP pour le polissage de la surface (1.1) de la lentille (1) ;
b) polissage d'au moins une partie de la surface (1.1) de la lentille (1).
